# EUROPEAN PATENT SPECIFICATION

(11) **EP 2 889 110 B1**
(45) Date of publication and mention of the grant of the patent: **06.03.2019**
(21) Application number: 13833294.5
(22) Date of filing: 14.06.2013
(51) Int. Cl.: A63B 71/06, G07F 17/32, F41J 3/02, F41J 5/04, F41J 5/14, F41J 5/24, F41J 3/00

(54) **DART GAME SYSTEM**
PFEILWERFSPIELSYSTEM
SYSTÈME DE JEU DE FLÉCHETTES

(30) Priority: 27.08.2012 KR 20120093647
(43) Date of publication of application: 01.07.2015
(73) Proprietor: Hong International Corp., Seoul 152-848 (KR)
(72) Inventor: HONG, Sang Uk, Seoul 135-100 (KR)
(74) Representative: Concone, Emanuele
(86) International application number: PCT/KR2013/005259
(87) International publication number: WO 2014/035034

(56) References cited:
- JP-A- H07 299 185
- JP-A- 2010 190 487
- KR-A- 20110 021 069
- US-A1- 2005 006 847
- US-A1- 2011 111 846
- US-A1- 2011 151 969
- US-B2- 7 361 083
- US-B2- 7 361 083

## Description

### TECHNICAL FIELD

The present disclosure relates to a dart game system including a dart game device and multiple external facilities having light source units which output light and sound source units which output sound, said dart game device and said multiple external facilities being interlocked and controlled by a control unit through a communication unit.

### BACKGROUND

The statements in this section merely provide background information related to the present disclosure and do not constitute prior art.

In general, a dart refers to a 'small arrow' and is one used for a dart game that makes marks by throwing an arrow-shaped dart pin to a centrifugal target marked with figures.

The dart game has an advantage that whoever can enjoy the dart game regardless of season anytime anywhere if there are an arrowheaded dart and the dart target.

In recent years, while various game methods have been developed and a scoring method is arranged, and as a result, the dart game is developed to worldwide leisure, all adults and children have conveniently enjoyed the dart game.

When a player plays a game by using the dart game device, the player generally senses a change in flickering scheme and color of an illumination through the light source unit of the dart game device, and as a result, the player feels joy and pleasure of the dart game.

However, usually dart game devices generate an illumination pattern when an event occurs (for example, hitting the dart target) in only their game devices. Contrary to this, when two or more persons execute the game by using separate dart game devices, if a game result of one dart game device is reflected onto another dart game device to influence an illumination pattern or a sound pattern, that provides a larger interest to the user in a game in which two persons or more participate. In this respect, JP 2010 190487 discloses a plurality of dart game devices connected communicatably with each other which respectively include a board body divided into a plurality of segments, a target position detecting section for detecting the input target segment, and a segment lighting section for projecting illumination light to each segment, each game device including a means for transmitting the positional information relating to the target segment to the opponent game device, and a means for lighting the corresponding opponent-side target segment from the plurality of segments on the basis of the positional information relating to the target segment transmitted from the opponent-side game device.

Further, if the result of the dart game may influence also other external facilities provided with light and sound units such as an illumination device constituting an interior of a place (for example, a dart game room, a bar, and the like) in which the dart game device is installed, the user will be able to enjoy the dart game under a still more splendid and interesting environment. The present invention has been made in an effort to allow a user of a dart game device to experience an improved illumination effect and sound effect in playing an electronic dart game device.

### SUMMARY

According to the present disclosure, there is provide a dart game system having the features of claim 1. The dart game device comprises a dart target having a plurality of point regions, a sensing unit configured to sense a hit to the dart target by a dart, a light source unit configured to output light, and a sound source unit configured to output sound. The plurality of facilities comprise additional light source units configured to output additional light, and additional sound source units configured to output additional sound. The control unit is configured to control the dart game device and the plurality of facilities, wherein the control unit is configured to control the light source unit of the dart game device and the additional light source units of the plurality of facilities to output light in a light pattern, which depends on an occurrence of an event, and wherein the control unit is configured to control the sound source unit of the dart game device and the additional sound source units of the plurality of facilities to output sound in a sound pattern, which depends on the occurrence of the event.

According to another aspect of the present disclosure, there is provided a gaming system. The gaming system comprises a plurality of dart game devices interworking with each other.

### BRIEF DESCRIPTION OF DRAWINGS

FIG. 1 is a schematic block diagram of a dart game system including an external facility having a light source unit according to the present disclosure.
FIG. 2 is a flowchart of a method using a dart game device interlocked with a facility according to the present disclosure.
FIG. 3 is a flowchart of a method using a light source unit when hits to a dart target by a dart are occurred simultaneously in a plurality of dart game devices, in a dart game device interlocked with a facility according to some embodiments of the present disclosure.
FIG. 4 is a schematic diagram of the dart game device according to some embodiments of the present disclosure.
FIG. 5 is a schematic diagram of a light pattern of the dart game device according to some embodiments of the present disclosure.
FIG. 6 is a schematic diagram of a light pattern of the dart game device according to some other embodiments of the present disclosure.
FIGS. 7a to 7e are schematic diagrams of a light pattern of the dart game device according to some other embodiments of the present disclosure.
FIGS. 8a and 8b are schematic diagrams of a light pattern of the dart game device according to some other embodiments of the present disclosure.
FIG. 9 is a schematic diagram of a dart game device of the present disclosure, which is interlocked with an external dart game device, according to some embodiments of the present disclosure.
FIG. 10 is a schematic diagram of a dart game device of the present disclosure, which is interlocked with two external dart game devices, according to some other embodiments of the present disclosure.
FIG. 11 is a schematic diagram of a dart game device of the present disclosure, which is interlocked with two external dart game devices, according to some other embodiments of the present disclosure.
FIGS. 12a to 12e are schematic diagrams of a dart game device of the present disclosure and a plurality of facilities, which are interlocked with each other, according to the present disclosure.

Various embodiments are described with reference to the drawings and similar reference numerals are used to represent similar elements throughout the drawings. For description, in the specification, various descriptions are presented to provide appreciation of the present disclosure. However, it is apparent that the embodiments can be executed without the specific description. In other examples, known structures and devices are presented in a block diagram form in order to facilitate description of the embodiments.

### DETAILED DESCRIPTION

The following description provides a brief description of one or more embodiments in order to provide basic appreciation of the present disclosure. This section is not a comprehensive overview for all available embodiments and does not intend to identify a core element among all elements or cover the scopes of all of the embodiments. An object of this section is to provide concepts of one or more embodiments in a simplified form as an introduction for a detailed description to be presented later.

A dart game system of the present disclosure has characteristics that one or a plurality of dart game devices 20 including light source units 22 are interlocked with a plurality of facilities 40 having light source units 45, and as a result, patterns of a change in flickering schemes and colors of the light source units are executed by a control unit 10 when a particular event occurs and the characteristics are implemented by the following configuration.

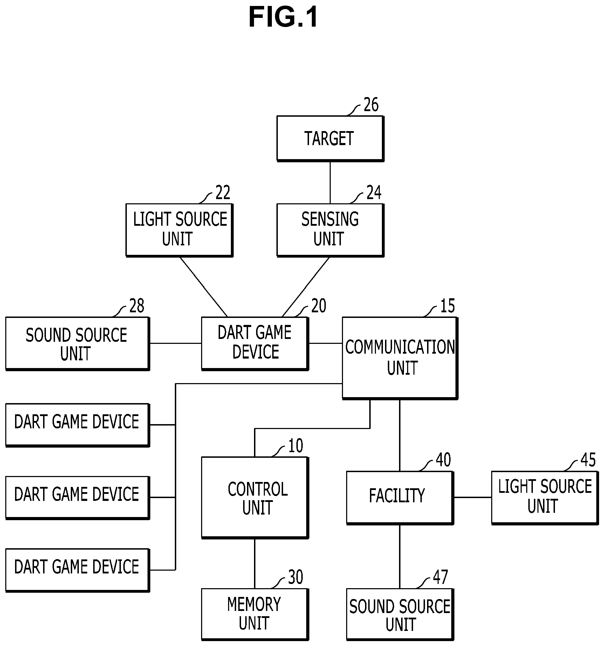

FIG. 1 is a schematic block diagram of a dart game system including an external facility 40 having a light source unit 45 according to the present disclosure. As illustrated in FIG. 1, the dart game system according to some embodiments of the present disclosure includes a dart game device 20; a control unit 10; a memory unit 30; and a facility 40 with a light source unit 45 and a sound source unit 47. Meanwhile, in some embodiments, the dart game system includes a display unit; a voice output unit; and an operation unit in addition thereto separately from the components. The dart game device 20 includes a dart target 26, a sensing unit 24, a light source unit 22, and a sound source unit 28. The dart target 26 includes a plurality of point regions and the dart target, but it is not limited thereto.

The sensing unit 24 as a part that senses a hit to the dart target 26 by a dart is a sensor that senses which part of the dart target the dart hits when the dart hits the dart target. The control unit 10 detects a region where the dart hits the target from the sensor and calculates the point and calculates the detected region to call a predetermined pattern of the corresponding point from the memory unit 30 and display the pattern through the light source unit 22; 45 and the sound source unit 28; 47. Meanwhile, this point is displayed even in the display unit.

The control unit 10, in some embodiments, includes one or more physical, actual storage devices. Examples of physical, actual storage devices include, but are not limited to, magnetic media such as a hard disk, a floppy disk and a magnetic tape, optical media such as a CD-ROM and a DVD, magneto-optical media such as a floptical disk, and a hardware device configured especially to store and execute a program, such as a ROM, a RAM, a solid state drive and a flash memory. The control unit 10 is implemented, in some embodiments, by one or more programmed processors and/or application-specific integrated circuits (ASICs).

In one or more embodiments, each dart game device 20 has a control unit 10 (not shown) implemented by a programmed processor and/or an ASIC, and communicated (e.g., by a wired or wireless network) with the control unit 10 using the communication unit 15 of the dart game device 20.

In some embodiments, the light source unit 22 of the dart game device 20 is a light source unit 22 installed in the dart game device 20 itself. In some embodiments, the light source unit 22 is constituted by one or more light emitted diodes (LEDs) and the like but the light source unit 22 is not particularly limited thereto.

Meanwhile, in some embodiments, a plurality of dart game devices 20 is installed, and as a result, multiple players enjoy a dart game together by schemes such as a match-up scheme, and the like. Only four dart game devices 20 are illustrated in FIG. 1, but the number of dart game devices 20 is not limited thereto.

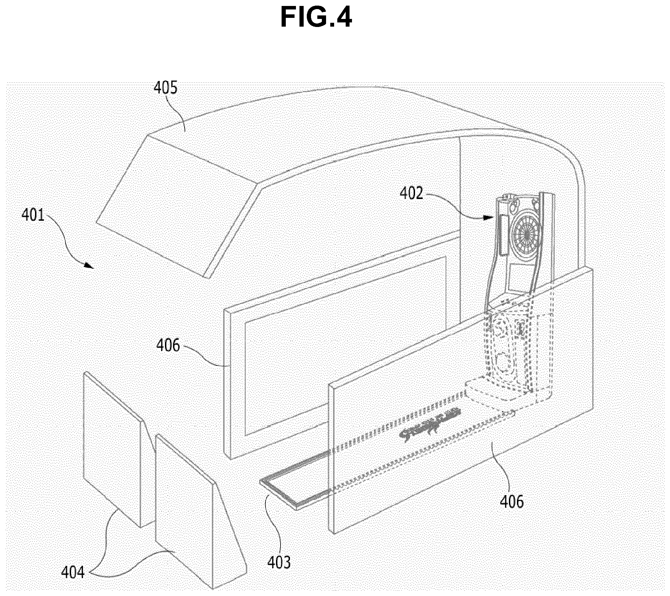

A dart game device 401 according to some embodiments of the present disclosure is illustrated in FIG. 4.

In some embodiments, the dart game device 401 according to the present disclosure includes all of a plate structure 403 to be laid under a player of the dart game device 401, a behind structure 404 disposed behind the player, a roof structure 405 roofing the player, one or more side structures 406 disposed on one or more sides of the player, and the like in addition to a body 402 of the dart game device 401. In some embodiments, the structure further includes a booth form, a throw line, a path, a pole, a wall, and the like, but is not limited thereto.

The light source units 22 and the sound source units 28 according to the present disclosure are installed in some or all of the plate structure 403, the behind structure 404, the roof structure 405, the one or more side structures 406, of the dart game device 401, and the like in addition to the body 402 of the dart game device 401.

According to the some embodiments of the present disclosure, a light source unit 22 and a sound source unit 28 installed in the body 402 of the dart game device 401, a light source unit 22 and a sound source unit 28 installed on the plate structure 403 of the dart game device 401, a light source unit 22 and a sound source unit 28 installed in the behind structure 404, a light source unit 22 and a sound source unit 28 installed in the roof structure 405, a light source unit 22 and a sound source unit 28 installed in the one or more side structures 406, and the like are interlocked with each other in real time or non-real time, and as a result, a light pattern and a sound pattern of the light source unit 22 and the sound source unit 28 are executed depending on an occurrence of an event.

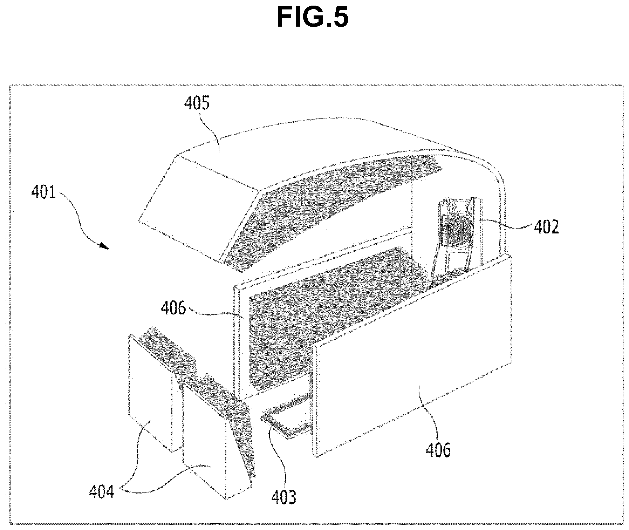

In some embodiments, referring to FIG. 5, the light source unit 22 installed in the body 402 of the dart game device 401, the light source unit 22 installed on the plate structure 403 of the dart game device 401, the light source unit 22 installed in the behind structure 404, the light source unit 22 installed in the roof structure 405, the light source unit 22 installed in the side structures 406, and the like flicker with the same color (for example, blue, and the like) and the sound source units 28 installed in the respective structures generate the same sound (for example, a buzzer sound, and the like) as an event occurs.

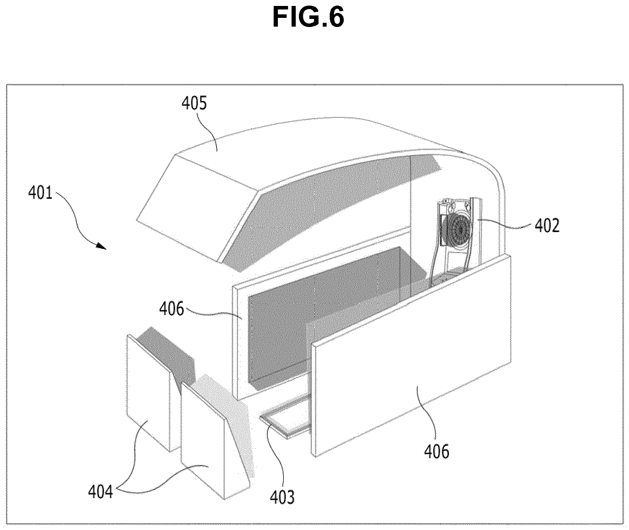

Further, according to some other embodiments, referring to FIG. 6, the light source unit 22 installed in the body 402 of the dart game device 401, the light source unit 22 installed on the plate structure 403 of the dart game device 401, the light source unit 22 installed in the behind structure 404 disposed behind the player, the light source unit 22 installed in the roof structure 405, the light source unit 22 installed in the side structures 406, and the like flicker with different colors respectively and the sound source units 28 installed in the respective structures generate different sounds, respectively as an event occurs.

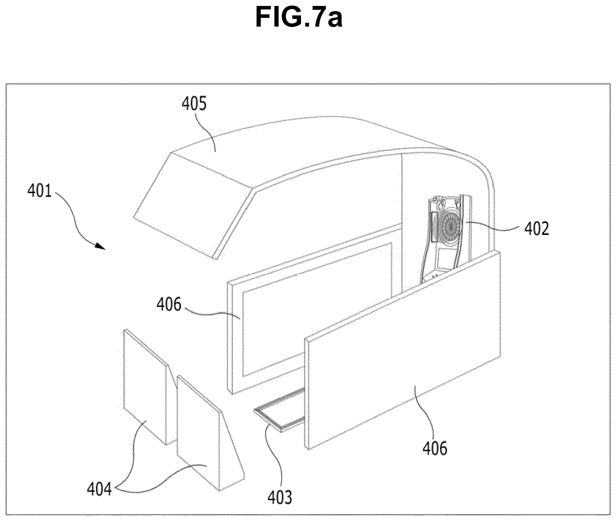

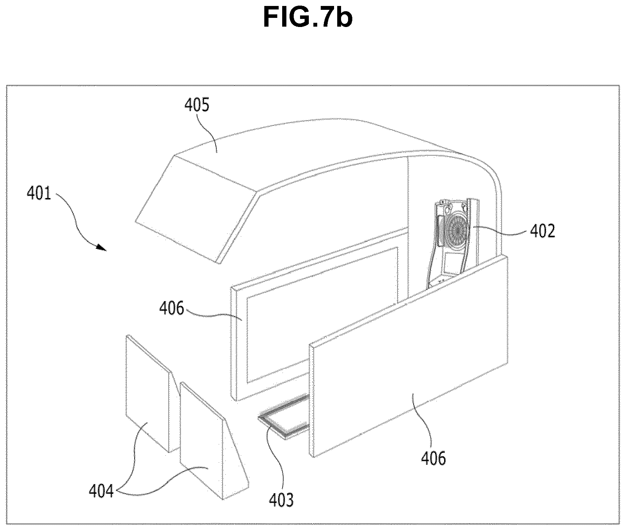

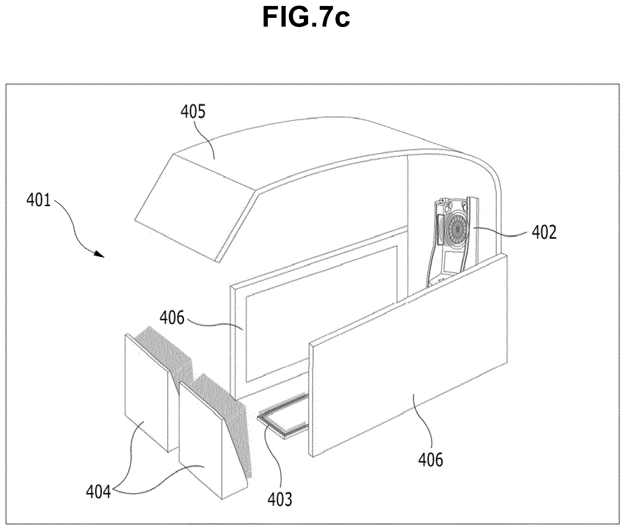

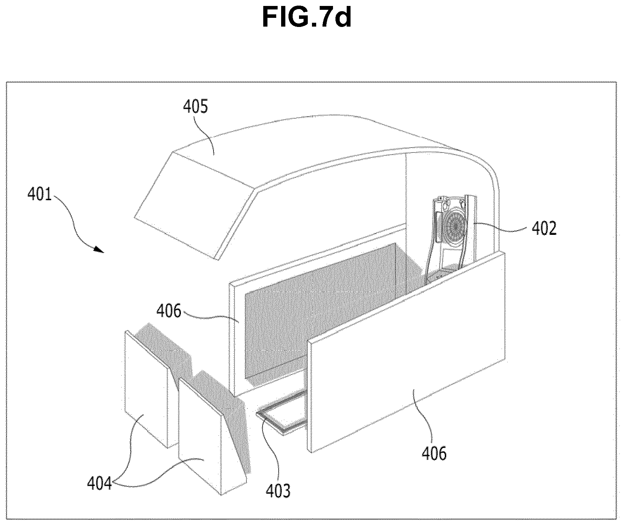

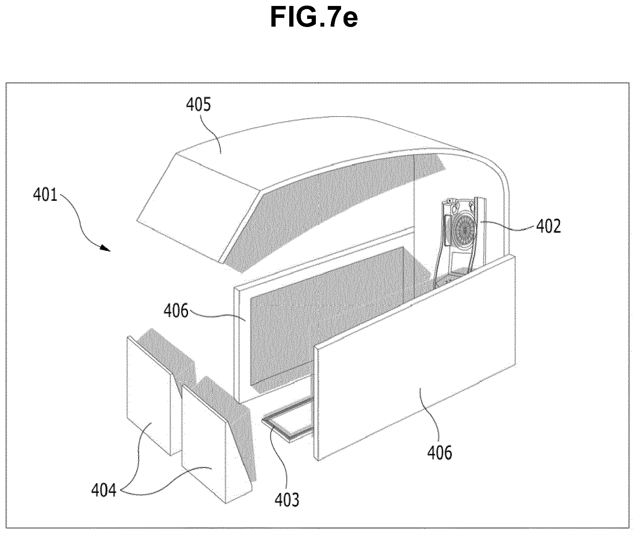

Further, according to some other embodiments, referring to FIGS. 7a to 7e, the light source unit 22 installed in the body 402 of the dart game device, the light source unit 22 installed on the plate structure 403 of the dart game device 401, the light source unit 22 installed in the behind structure 404, the light source unit 22 installed in the roof structure 405, the light source unit 22 installed in the side structures 406, and the like sequentially flicker with the same color or different colors and the sound source units 28 installed in the respective structures sequentially generate sound as an event occurs.

Referring to FIGS. 7a to 7e, the light source units 22 are turned on in the order of a target part of the dart game body 402, the plate structure 403, the behind structure 404, the side structures 406, and the roof structure 405, and as a result, a more splendid illumination effect is achieved. The sound source units 28 installed in the respective structures generate sound according to a predetermined order to achieve an enjoyable sound effect.

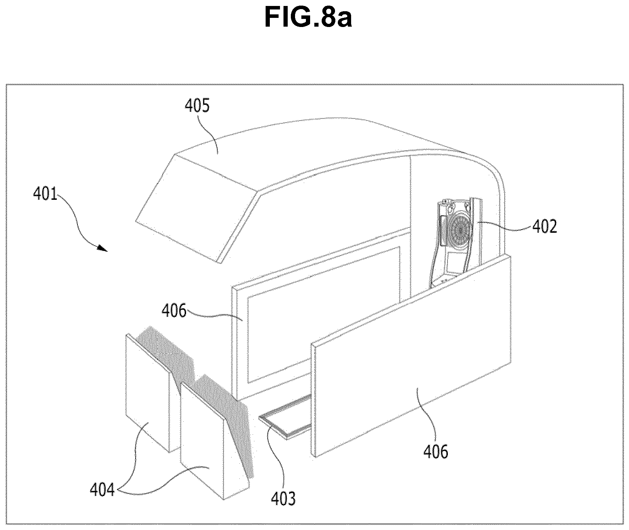

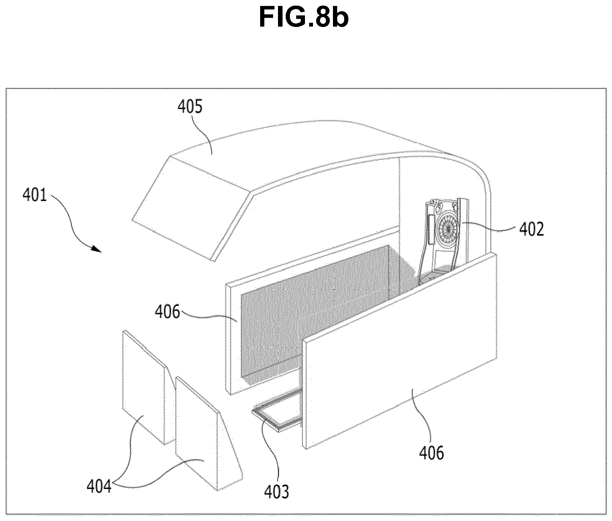

Further, according to some other embodiments, referring to FIGS. 8a and 8b, as an event occurs, the light source unit 22 installed in the body 402 of the dart game device 401 and the light source unit 22 installed in the behind structure 404 are synchronized to flicker with the same color at the same time, the light source unit 22 installed on the plate structure 403 of the dart game device 401 and the light source unit 22 installed in the side structures 406 are synchronized to flicker with the same color at the same time, and the sound source unit 28 installed in the body 402 of the dart game device 401 and the sound source unit 28 installed in the behind structure 404 are synchronized to generate sound, and the sound source unit 28 installed on the plate structure 403 of the dart game device 401 and the sound source unit 28 installed in the side structures 406 are synchronized to generate the sound.

In FIG. 8a, the body 402 and the behind structure 404 of the dart game device 401 are synchronized to be lit up and in FIG. 8b, the plate structure 403 and the side structures 406 are synchronized to be lit up.

A form in which the patterns are executed in the light source unit 22 and the sound source unit 28 described as above is an embodiment, but is not limited thereto.

The facilities 40 mean one or more facilities interlocked with the dart game device 401, and the facilities 40 include, for example, an external dart game device 401, a throw line, a path, a pole, a wall, a table, a chair, and the like. The term "interlocked" includes meanings of "connected," via a physical line or a network line, "synchronized," "linked," and the like. The facilities 40 include light source units 45, the light source units 45 are embedded in the facilities 40, and as the light source units 45, one or more LED lamp are used.

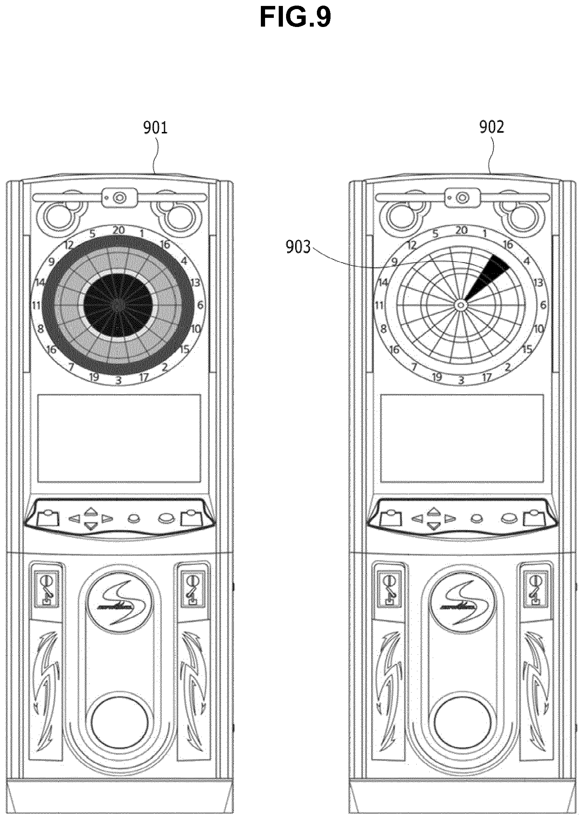

FIGS. 9 to 11 illustrate the case where the facilities 40 include different dart game devices 901, 902, 1001, 1002, 1003, 1101, 1102 and 1103 according to some embodiments of the present disclosure.

As illustrated in FIGS. 9 to 11, a light source unit 22 of a dart game device 901, 1001, 1101 of the player and light source units 22 of dart game devices 902, 1002, 1003, 1102 and 1103 therearound simultaneously flicker or change light of the light source units 22 simultaneously, and as a result, the player dynamically enjoys the dart game device and further 901, 902, 1001, 1002, 1003, 1101, 1102 and 1103, an interest in the dart game device is also incurred very strongly.

In detail, when two or more players enjoy the dart game in a match-up mode, in the case where one player succeeds in making a predetermined event which is not high in probability, for example, in the case where a red eye is hit continuously three times, light which is very splendid and dazzling in the dart game device of a match-up counterpart occurs or light in which the dart target is not well seen is generated, and as a result, an interest in the game is further incurred.

In this case, when the dart hits a predetermined region of the target in a dart game device 901 of the player, a corresponding region 903 of a target of an external dart game device 902 is deactivated and further, the light flicker.

In some embodiments, as illustrated in FIG. 9, when a player of a dart game device 901 scores a high point, a predetermined target region 903 of an external device 902 is deactivated and although a player of the external device 902 hits the dart on the predetermined target region 903, the hit is not recognized as the point.

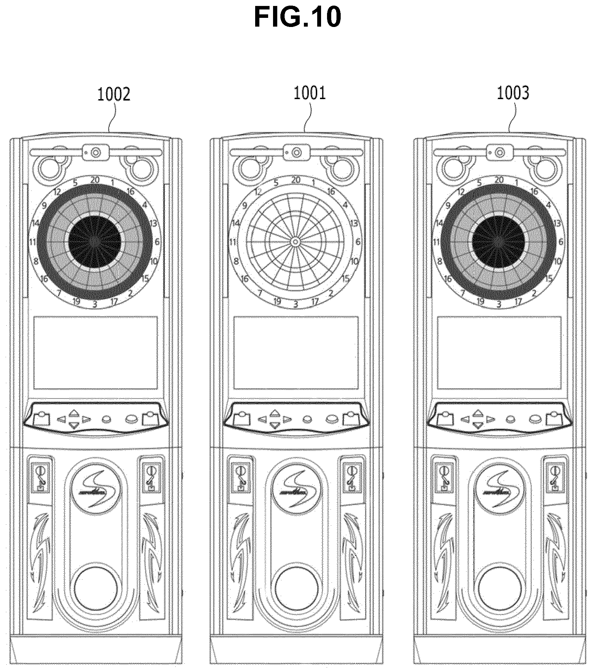

Further, in some embodiments, as illustrated in FIG. 10, when a player of a dart game device 1001 makes a high point, one or more external devices 1002 and 1003 simultaneously flicker or a specific animation effect is implemented in one or more external devices 1002 and 1003.

Further, when the dart game device 1101 includes a plate structure of the dart game device, a behind structure disposed behind a player of the dart game device, a roof structure roofing the player, and one or more side structures disposed on one or more sides of the player in addition to a body of the dart game device and one or more external devices 1102 and 1103 as the dart game device each include a plate structure of the dart game device, a behind structure disposed behind a player of the external device, a roof structure roofing the player, one or more side structures, and the like, in addition to the body of the external device, light source units and sound source units installed in the respective structures are implemented in patterns.

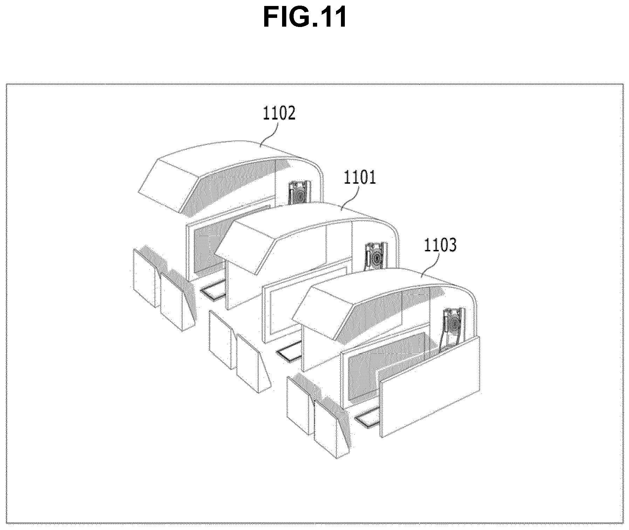

In some embodiments, as illustrated in FIG. 11, when the player of the dart game device 1101 hits the red eye continuously three times, by a dart, all of the light source units installed in the dart game device 1101 and the light source units installed in the external devices 1102 and 1103 flicker and patterns of the same sound effect is executed in all of the sound source units.

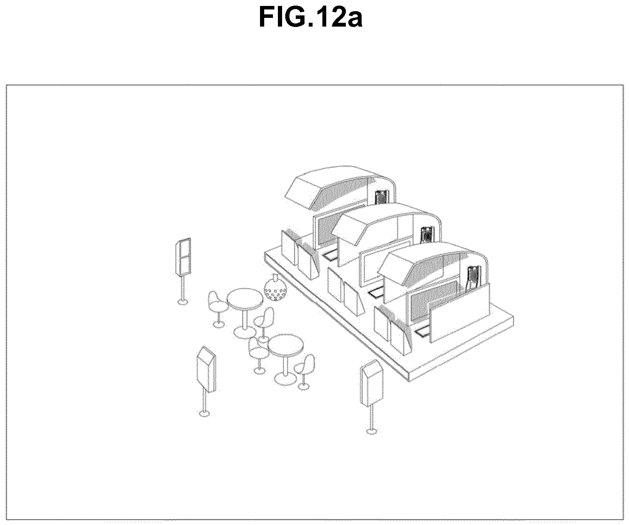

Referring to FIGS. 12a to 12e, according to the present disclosure, a dart game device and a plurality of facilities are interlocked with each other.

The dart game device and the plurality of facilities are present in a dart game room, a bar, a beerhouse, a restaurant and the like in which the dart game system is installed.

In some embodiments, when the player of the dart game device keeps a better score like three-sequence red eyes, the external dart game devices are lit up as illustrated in FIG. 12a.

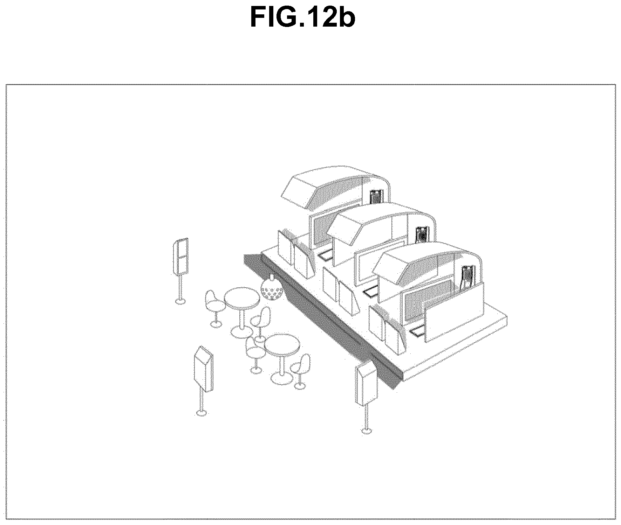

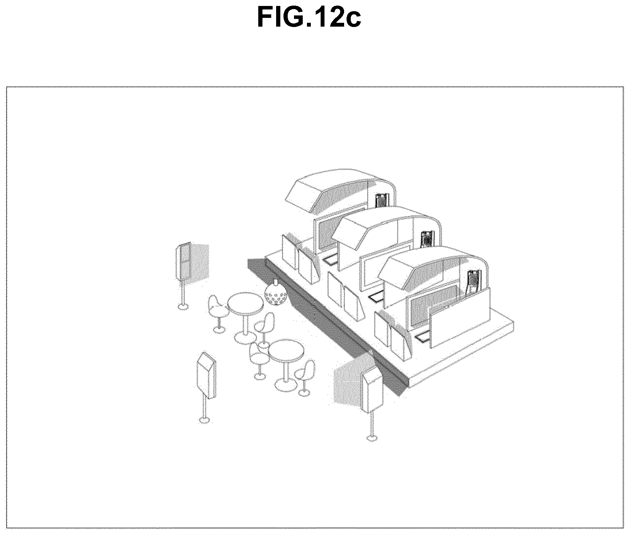

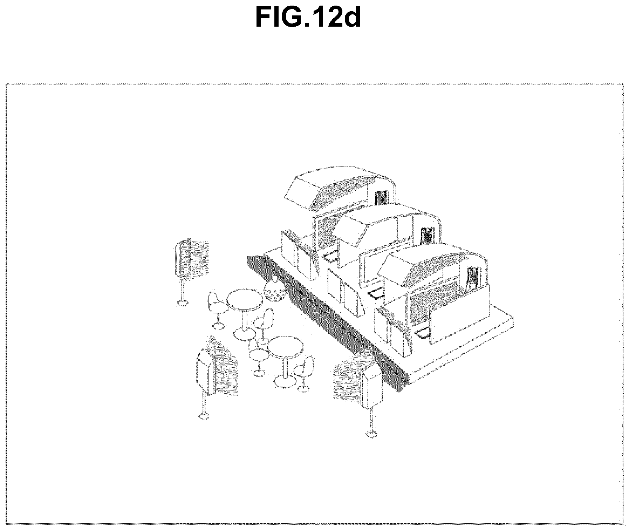

Thereafter, as illustrated in FIG. 12b, a side light source unit on a floor is lit up and as illustrated in FIGS. 12c and 12d, light source units installed in a pole shape in the dart game room, and the like are lit up.

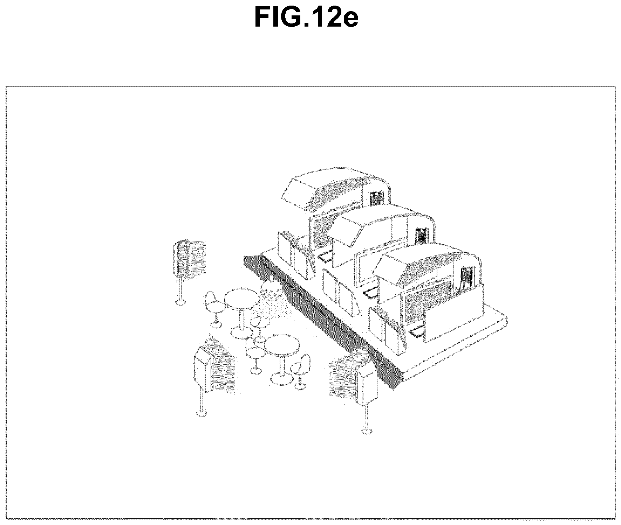

Next, as illustrated in FIG. 12e, a light source unit that is hung on a ceiling is lit up.

Besides, when light source units are installed even in the table, the chair, and the like, it is possible that the light source units also execute the pattern of the light source units according to a predetermined pattern, a pattern read from the memory unit, a pattern received through the communication unit, and the like.

Further, when the sound source units are installed in the dart game device and the plurality of facilities, in some embodiments, the patterns of the sound source units are executed according to a predetermined pattern determined through the sound source unit, the pattern read from the memory unit, the pattern received through the communication unit, and the like.

The dart game system includes all facilities included in the dart game room and the like as described above, and since the facilities include the light source units and the sound source units, the light source units and the sound source units execute patterns of illuminations and sounds depending on occurrence of the event, and as a result, the dart game players play the dart game under a more interesting and fantastic atmosphere.

The facility receives the pattern of the light source unit 45 of the facility 40, which is stored in the memory unit 30 from the control unit 10 to execute the corresponding pattern through the light source unit 45.

The memory unit 30 is a part that stores the patterns of the change in flickering scheme and color of the light source unit 22; 45 depending on an occurrence of an event. The memory unit 30 as a memory or a hard disk of a computer stores a dart game program, the patterns of the light source units, voice, a screen, and the like. According to the present disclosure, it is illustrated that the memory unit 30 is installed outside the dart game device 20 in FIG. 1, but, in some embodiments, the memory unit 30 is installed inside the dart game device 20, and one memory unit 30 is illustrated, but a plurality of memory units can be installed inside the dart game device 20, inside the facility 40, outside the dart game device 20, and outside the facility 40.

Further, the patterns of the light source units and the sound source units are patterns received from a communication unit 15 having a communication interface, which is included in some or all of the dart game device 20, the facility 40 and the like as well as the patterns stored in the memory unit 30.

Herein, the patterns of the light source units mean the patterns of the change in flickering scheme and color of the illumination or a combination of the patterns.

Further, the pattern of the acoustic pattern of the sound source units means a pattern of combinations of all sounds issued from the sound source units.

In addition, the event includes an identification of the player, a hit to a dart target by the dart, a change of the player, game ending, and the like. Patterns for a change in various flickering schemes and colors are determined by considering which part of the dart target the dart hits when the dart hits the dart target. The event is an embodiment and it is possible that the event includes all events which occur when executing the dart game.

The control unit 10 is a part that controls the light source units and the sound source units of the dart game device 20 and of the facility 40 to execute the patterns depending on the occurrence of the event, and further controls the light source units and the sound source units of the dart game device 20 and of the facility 40 to be interlocked with each other.

According to the present disclosure, it is illustrated that the control unit 10 is installed outside the dart game device 20 in FIG. 1, but the present disclosure is not limited thereto, and in some embodiments, the control unit 10 is installed inside the dart game device 20 or inside the facility 40. Further, only one control unit 10 is illustrated, but the present disclosure is not limited thereto.

The pattern previously stored in the memory unit 30 or the pattern received through the communication unit 15 is executed in some or all of the light source units 22 and the sound source units 28 of the dart game device 20 and in the light source units 45 and the sound source units 47 of the facility 40, by the control unit 10.

In some of the light source units 22 and the sound source units 28 of the dart game device 20 and the light source units 45 and the sound source units 47 of the facility 40, the pattern is not executed by the control unit 10, but the pattern is executed by a predetermined scheme.

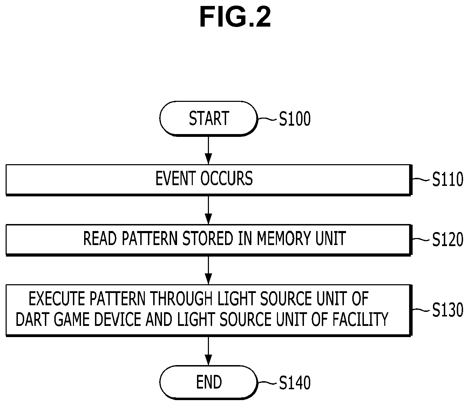

An execution order when the event occurs in the dart game system including the plurality of facilities 40 will be described with reference to FIG. 2.

When the event occurs (S110), the sensing unit 24 or the control unit 10 recognizes the corresponding event and the control unit 10 reads the pattern previously stored in the memory unit 30 based on contents of the recognized event (S120) and the read pattern is transmitted to the light source unit 22 and the sound source unit 28 of the dart game device 20 and the light source unit 45 and the sound source unit 47 of the facility 40, and as a result, the pattern is executed (S130).

In some embodiments, the control unit 10 reads or executes the pattern received through the communication unit 15 based on the contents of the recognized event.

Meanwhile, the control unit 10 controls the light source unit 45 and the sound source unit 47 of the facility 40 to execute the patterns only when the event is the hit to the dart target by the dart and the patterns are stored so that the patterns are executed so in a pre-stored program.

In some embodiments, when the dart game is performed simultaneously in the plurality of dart game devices 20 in the dart game system according to the present disclosure, when the dart hits the dart target simultaneously in the plurality of dart game devices 20, the control unit 10 compares points of the respective dart game devices 20, and as a result, only a light pattern and a sound pattern corresponding to a predetermined priority are executed through the light source unit 45 and the sound source unit 47 of the facility 40.

In some embodiments, when the game is performed in three dart game devices 20 of A, B, and C, if the darts hit the dart targets simultaneously or at a predetermined time interval (when a new dart hits within a time before one pattern starts and ends) in three dart game devices 20, the respective sensing units 24 of three dart game devices sense regions which the dart hits and the control unit 10 calculates points corresponding to the hit regions to compare the points of A, B, and C. The control unit 10 controls the light source unit 45 and the sound source unit 47 of the facility 40 so that a pattern corresponding to a predetermined priority (for example, a high point, a low point, a winning shot, and the like) is executed through comparison of the points. The control is made by the control unit 10 and by storing a program corresponding to the relevant event in the memory unit 30 in advance.

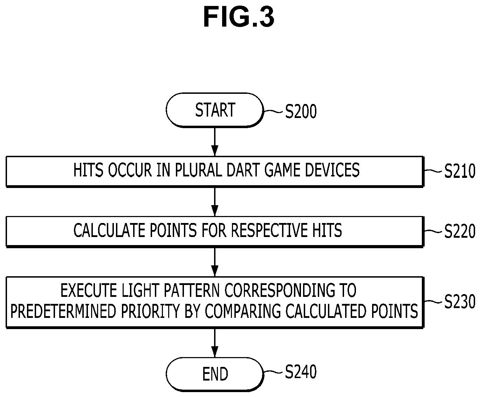

The contents are described through the flowchart as illustrated in FIG. 3.

When the dart hits the dart target simultaneously or at a predetermined time interval in the plurality of dart game devices (S210), hitting in each dart game device is sensed and points for the hitting are calculated (S220) and the points calculated hereinafter are compared, and as a result, only an illumination pattern corresponding to a predetermined priority is executed (S230).

The description of the presented embodiments is provided so that a person skilled in the art of the present disclosure can use or implement the dart game system of the present disclosure and would be able to make various modifications of the embodiments, and the general principles defined herein are applied to other embodiments without departing from the scope of the present disclosure. Therefore, the present disclosure is not limited to the embodiments presented herein, but should be analyzed within the widest range which is consistent with the principles and new features presented herein.
light source unit of the throw line is lit up only when the player starts the dart game device in order to prevent an exercise dart from being played on the throw line while the player does not start the dart game device, in particular, does not insert the coin when the dart game device is a type which starts only by inserting the coin. When the player does not start the dart game device, since the player does know an accurate distance of the throw line, it is possible to prevent the player from occupying the dart game device to play the exercise dart. In particular, when the dart game device is a form that starts only by inserting the coin, it is possible to prevent the player from playing the exercise dart without expense.

The description of the presented embodiments is provided so that one who ordinarily skilled in the art of the present disclosure use or implement the dart game system of present disclosure. One who ordinarily skilled in the art would be able to make various modifications of the embodiments, and general principles defined herein is applied to other embodiments without departing from the scope of the present invention as defined in the appended claims.

## Claims

1. A dart game system comprising:
a dart game device (20) including a dart target (26) having a plurality of point regions, a sensing unit (24) sensing hitting by a dart, a light source unit (22) and a sound source unit (28);
a plurality of facilities (40) each including light source units (45) and sound source units (47); and
a control unit (10) controlling the dart game device (20) and the plurality of facilities (40) through a communication unit (15) such that they are interlocked,
said control unit (10) controlling patterns of a change in flickering schemes and colors of the light source units (22; 45) and patterns of sound effects of the sound source units (28; 47) depending on occurrence of an event,
**characterized in that**
the plurality of facilities (40) includes at least one of a throw line, a path, a table, and a chair located in the place in which the dart game device (20) is present.

2. The dart game system of claim 1, wherein the plurality of facilities (40) includes external dart game devices (20), and all the dart game devices (20) are capable of playing a dart game with each other.

3. The dart game system of claim 1, wherein the event includes identification of a user, hitting a dart target (26) by a dart, a change of the user and game ending.

4. The dart game system of claim 2, wherein when multiple dart game devices (20) are playing a dart game with each other, in the case where darts hit dart targets (26) simultaneously or at a predetermined time interval in the dart game devices (20), only a light pattern and a pattern of sound effect corresponding to a predetermined priority are executed through the light source units (22; 45) and the sound source units (28; 47).

5. The dart game system of claim 1, wherein each of the dart game device (20) and the plurality of facilities (40) further includes a communication unit (15) having a communication interface, and
the dart game device (20) and the plurality of facilities (40) are capable of exchanging the patterns of the change in flickering schemes and colors of the light source units (22;45) and the patterns of the sound effects of the sound source units (28;47) by using the communication units (15).

6. The dart game system of claim 2, wherein each of the dart game devices (20) includes a communication unit (15) having a communication interface, and
the dart game devices (20) are capable of playing a dart game with each other through the communication units (15).

7. The dart game system of claim 2, wherein when multiple dart game devices (901, 902) are playing a dart game with each other and a dart hits a specific region of a dart target of one dart game device (901), regions (903) of corresponding targets of different dart game devices (902) are deactivated.

8. The dart game system of claim 1, further comprising:
a memory unit (30) storing the patterns of the change in flickering schemes and colors of the light source units (22; 45) and the patterns of the sound effects of the sound source units (28; 47) depending on the occurrence of the event.

9. The dart game system of claim 8, wherein the patterns are read from the memory unit (30) and executed by the light source units (22; 45) and the sound source units (28; 47).

10. The dart game system of claim 8, wherein the patterns are patterns stored in the memory unit (30) or patterns received through the communication unit (15).

11. The dart game system of claim 1, wherein the dart game device further includes at least one of a plate structure (403) to be laid under a player, a structure (404) disposed behind a player, a structure (405) configuring an upper roof above the player, and a structure (406) disposed on the side of the player.

12. The dart game system of claim 11, wherein each of at least one of the plate structure (403) to be laid under a player, the structure (404) disposed behind the player, the structure (405) configuring the upper roof above the player, and the structure (406) disposed on the side of the player includes a light source unit and a sound source unit.

13. The dart game system of claim 2, wherein each of the external dart game devices further includes at least one of a plate structure (403) to be laid under a player, a structure (404) disposed behind the player, a structure (405) configuring an upper roof above the player, and a structure (406) disposed on a side of the player, and
each of at least one of the plate structure (403) to be laid under a player, the structure (404) disposed behind the player, the structure (405) configuring the upper roof above the player, and the structure (406) disposed on the side of the player includes a light source unit and a sound source unit.

## Patentansprüche

1. Ein Wurfpfeilspielsystem, umfassend
- eine Wurfpfeilspielvorrichtung (20) einschließlich einer Wurfpfeilzielscheibe (26) mit einer Vielzahl von Punktebereichen, einer Sensoreinheit (24), die das Auftreffen eines Wurfpfeils sensiert, eine Lichtquelleneinheit (22) und eine Schallquelleneinheit (28);
- eine Mehrzahl von Einrichtungen (40), von denen jede eine Lichtquelleneinheit (45) und eine Schallquelleneinheit (47) umfasst; und
- eine Steuereinheit (10), welche die Wurfpfeilspielvorrichtung (20) und die Mehrzahl von Einrichtungen (40) über eine Kommunikationseinheit (15) derart steuert, dass diese wechselseitig verriegelt sind;
- wobei die besagte Steuereinheit (10) Veränderungsmuster in dem Flackerschema und den Farben der Lichtquelleneinheiten (22; 45) und Klangeffektmuster der Schallquelleneinheiten (28; 47) in Abhängigkeit von dem Eintreten eines Ereignisses steuert,
**dadurch gekennzeichnet, dass**
- die Mehrzahl von Einrichtungen (40) wenigstens eine Wurflinie, einen Gang, einen Tisch und einen Sitz umfasst, welche an demjenigen Ort angeordnet sind, wo sich die Wurfpfeilspielvorrichtung (20) befindet.

2. Das Wurfpfeilspielsystem nach Anspruch 1, wobei die Mehrzahl von Einrichtungen (40) externe Wurfpfeilspielvorrichtungen (20) umfasst, und wobei alle diese Wurfpfeilspielvorrichtungen (20) fähig sind, miteinander ein Wurfpfeilspiel zu spielen.

3. Das Wurfpfeilspielsystem nach Anspruch 1, wobei das Ereignis die Identifizierung eines Benutzers, das Treffen einer Zielscheibe (26) durch einen Wurfpfeil, einen Benutzerwechsel und das Spielende umfasst.

4. Das Wurfpfeilspielsystem nach Anspruch 2, wobei dann, wenn mehrere Wurfpfeilspielvorrichtungen (20) miteinander ein Wurfpfeilspiel spielen, in dem Fall, dass Wurfpfeile Wurfpfeilzielscheiben (26) in den Wurfpfeilspielvorrichtungen (20) gleichzeitig oder in einem vorbestimmten Zeitintervall treffen, entsprechend einer vorbestimmten Priorität über die Lichtquelleneinheiten (22; 45) nur ein Leuchtmuster und über die Schallquelleneinheiten (28;47) nur ein Schalleffektmuster ausgegeben wird.

5. Das Wurfpfeilspielsystem nach Anspruch 1, wobei jede der Wurfpfeilspielvorrichtungen (20) und der Mehrzahl von Einrichtungen (40) ferner eine Kommunikationseinheit (15) mit einer Kommunikationsschnittstelle aufweist, und
die Wurfpfeilspielvorrichtung (20) und die Mehrzahl von Einrichtungen (40) fähig sind, Veränderungsmuster in dem Flackerschema und den Farben der Lichtquelleneinheiten (22; 45) und Klangeffektmuster der Schallquelleneinheiten (28; 47) unter Verwendung der Kommunikationseinheiten (15) auszutauschen.

6. Das Wurfpfeilspielsystem nach Anspruch 2, wobei jede der Wurfpfeilspielvorrichtungen (20) eine Kommunikationseinheit (15), die eine Kommunikationsschnittstelle aufweist, und
die Wurfpfeilspielvorrichtungen (20) fähig sind, miteinander über die Kommunikationseinheiten (15) ein Wurfpfeilspiel zu spielen.

7. Das Wurfpfeilspielsystem nach Anspruch 2, wobei dann, wenn mehrere Wurfpfeilspielvorrichtungen (901, 902) miteinander ein Wurfpfeilspiel spielen und ein Wurfpfeil einen speziellen Bereich einer Wurfpfeilzielscheibe einer Wurfpfeilspielvorrichtung (901) trifft, Bereiche (903) der entsprechenden Zielscheiben verschiedener Wurfpfeilspielvorrichtungen (902) deaktiviert werden.

8. Das Wurfpfeilspielsystem nach Anspruch 1, ferner umfassend:
eine Speichereinheit (30), welche die Veränderungsmuster in dem Flackerschema und den Farben der Lichtquelleneinheiten (22; 45) und die Klangeffektmuster der Schallquelleneinheiten (28; 47) in Abhängigkeit von dem Eintreten eines Ereignisses speichert.

9. Das Wurfpfeilspielsystem nach Anspruch 8, wobei die Muster aus der Speichereinheit (30) gelesen werden und von den Lichtquelleneinheiten (22; 45) und den Schallquelleneinheiten (28; 47) ausgegeben werden.

10. Das Wurfpfeilspielsystem nach Anspruch 8, wobei die Muster solche Muster sind, welche in der Speichereinheit (30) gespeichert sind oder Muster, welche über die Kommunikationseinheit (15) empfangen werden.

11. Das Wurfpfeilspielsystem nach Anspruch 1, wobei die Wurfpfeilspielvorrichtung ferner wenigstens eine Plattenstruktur (403) zum Unterlegen unter einen Spieler umfasst, eine Struktur (404), die hinter dem Spieler platziert wird, eine Struktur (405), die eine oberseitige Überdachung oberhalb des Spielers bildet, und eine Struktur (406), die an der Seite des Spieler angeordnet ist.

12. Das Wurfpfeilspielsystem nach Anspruch 11, wobei jede der wenigstens einen Plattestruktur (403) zum Unterlegen unter einen Spieler, der Struktur (404), die hinter dem Spieler platziert wird, der Struktur (405), die eine oberseitige Überdachung oberhalb des Spielers bildet, und der Struktur (406), die an der Seite des Spielers angeordnet ist, eine Lichtquelleneinheit und eine Schallquelleneinheit umfasst.

13. Das Wurfpfeilspielsystem nach Anspruch 2, wobei jede von den externen Wurfpfeilspielvorrichtungen ferner wenigstens eine Plattenstruktur (403) zum Unterlegen unter einen Spieler, eine Struktur (404), die hinter dem Spieler platziert wird, eine Struktur (405), welche eine oberseitige Überdachung oberhalb des Spielers bildet, und eine Struktur (406), die an der Seite des Spielers angeordnet ist, umfasst, und
jede der wenigstens einen Plattenstruktur (403) zum Unterlegen unter einen Spieler, der Struktur (404), die hinter dem Spieler platziert wird, der Struktur (405), die eine oberseitige Überdachung oberhalb des Spielers bildet, und der Struktur (406), die an der Seite des Spielers angeordnet ist, eine Lichtquelleneinheit und eine Schallquelleneinheit umfasst.

## Revendications

1. Système de jeu de fléchettes comprenant :
un dispositif de jeu de fléchettes (20) comprenant une cible (26) ayant une pluralité de régions de point, une unité de détection (24) détectant la frappe par une fléchette, une unité de source de lumière (22) et une unité de source sonore (28) ;
une pluralité d'installations (40) comprenant chacune des unités de source de lumière (45) et des unités de source sonore (47) ; et
une unité de commande (10) commandant le dispositif de jeu de fléchettes (20) et une pluralité d'installations (40) par le biais d'une unité de communication (15) de sorte qu'elles sont mutuellement verrouillées,
ladite unité de commande (10) commandant des modèles d'un changement de schémas de scintillement et les couleurs des unités de source de lumière (22 ; 45) et des modèles d'effets sonores des unités de source sonore (28 ; 47) en fonction de l'occurrence d'un événement,
**caractérisé en ce que** :
la pluralité d'installations (40) comprend au moins l'une parmi une ligne de lancer, une trajectoire, une table et une chaise positionnées à l'endroit où se trouve le dispositif de jeu de fléchette (20).

2. Système de jeu de fléchettes selon la revendication 1, dans lequel la pluralité d'installations (40) comprend des dispositifs de jeu de fléchettes externes (20), et tous les dispositifs de jeu de fléchette (20) sont capables de jouer une partie de fléchette entre eux.

3. Système de jeu de fléchettes selon la revendication 1, dans lequel l'événement comprend l'identification d'un utilisateur, la frappe d'une cible (26) par une fléchette, un changement d'utilisateur et la fin de la partie.

4. Système de jeu de fléchettes selon la revendication 2, dans lequel plusieurs dispositifs de jeu de fléchettes (20) jouent une partie de jeu de fléchette entre eux, dans le cas dans lequel les fléchettes touchent les cibles (26) simultanément ou à un intervalle de temps prédéterminé dans les dispositifs de jeu de fléchette (20), seuls un modèle lumineux et un modèle d'effet sonore correspondant à une priorité prédéterminée sont exécutés par le biais des unités de source de lumière (22 ; 45) et des unités de source sonore (28 ; 47).

5. Système de jeu de fléchettes selon la revendication 1, dans lequel chacun parmi le dispositif de jeu de fléchette (20) et la pluralité d'installations (40) comprend en outre une unité de communication (15) ayant une interface de communication, et
le dispositif de jeu de fléchettes (20) et la pluralité d'installation (40) peuvent échanger les modèles de changement des schémas de scintillement et de couleurs des unités de source de lumière (22 ; 45) et les modèles des effets sonores des unités de source de lumière (28 ; 47) en utilisant les unités de communication (15).

6. Système de jeu de fléchettes selon la revendication 2, dans lequel chacun des dispositifs de jeu de fléchettes (20) comprend une unité de communication (15) ayant une interface de communication, et
des dispositifs de jeu de fléchette (20) sont capables de jouer une partie entre eux par le biais des unités de communication (15).

7. Système de jeu de fléchettes selon la revendication 2, dans lequel lorsque plusieurs dispositifs de jeu de fléchettes (901, 902) jouent une partie entre eux et qu'une fléchette touche une région spécifique d'une cible d'un dispositif de jeu de fléchettes (901), les régions (903) des cibles correspondantes des différents dispositifs de jeu de fléchettes (902) sont désactivées.

8. Système de jeu de fléchettes selon la revendication 1, comprenant en outre :
une unité de mémoire (30) stockant les modèles de changement de schémas de scintillement et les couleurs des unités de source de lumière (22 ;45) et les modèles des effets sonores des unités de source sonore (28 ; 47) en fonction de l'occurrence de l'événement.

9. Système de jeu de fléchettes selon la revendication 8, dans lequel les modèles sont lus par l'unité de mémoire (30) et exécutés par les unités de source de lumière (22 ; 45) et les unités de source sonore (28 ; 47).

10. Système de jeu de fléchettes selon la revendication 8, dans lequel les modèles sont des modèles stockés dans l'unité de mémoire (30) ou des modèles reçus par l'unité de communication (15).

11. Système de jeu de fléchettes selon la revendication 1, dans lequel le dispositif de jeu de fléchette comprend en outre au moins l'une parmi une structure de plaque (403) destinée à être placée sous un joueur, une structure (404) disposée derrière un joueur, une structure (405) configurant un toit supérieur au-dessus du joueur, et une structure (406) disposée sur le côté du joueur.

12. Système de jeu de fléchettes selon la revendication 11, dans lequel chacune d'au moins l'une parmi la structure de plaque (403) destinée à être placée sous un joueur, la structure (404) disposée derrière le joueur, la structure (405) configurant le toit supérieur au-dessus du joueur et la structure (406) disposée sur le côté du joueur comprend une unité de source de lumière et une unité de source sonore.

13. Système de jeu de fléchettes selon la revendication 2, dans lequel chacun des dispositifs de jeu de fléchette externes comprend en outre au moins l'une parmi une structure de plaque (403) destinée à être placée sous un joueur, une structure (404) disposée derrière le joueur, une structure (405) configurant un toit supérieur au-dessus du joueur, et une structure (406) disposée sur un côté du joueur, et
chacune d'au moins l'une parmi une structure de plaque (403) destinée à être placée sous un joueur, une structure (404) disposée derrière le joueur, une structure (405) configurant un toit supérieur au-dessus du joueur, et une structure (406) disposée sur un côté du joueur comprend une unité de source de lumière et une unité de source sonore.
